# EUROPEAN PATENT APPLICATION

(11) **EP 4 790 792 A1**
(43) Date of publication of application: **12.08.2026**
(21) Application number: 24893003.4
(22) Date of filing: 12.09.2024
(51) Int. Cl.: H01M 10/613

(54) **THERMAL MANAGEMENT COMPONENT, BATTERY AND ELECTRIC DEVICE**

(30) Priority: 20.11.2023 CN 202323129834 U
(71) Applicant: Contemporary Amperex Technology Co., Limited, Ningde, Fujian 352100 (CN)
(72) Inventor: HOU, Yuepan, Ningde, Fujian 352100 (CN); SONG, Binjie, Ningde, Fujian 352100 (CN)
(74) Representative: Lorenz Seidler Gossel Part. mbB
(86) International application number: PCT/CN2024/118586
(87) International publication number: WO 2025/107844

(57) **Abstract**

Disclosed are a thermal management component (400), a battery (100) and an electric device. The thermal management component (400) comprises a plate body (10), wherein the plate body (10) encloses a heat exchange cavity (11) for circulation of a heat exchange medium; in the direction of length of the plate body (10), a plurality of supporting portions are provided in the heat exchange cavity (11) at intervals; and the heat exchange cavity (11) comprises a pair of inner walls which are oppositely arranged in the direction of thickness, and the ends of each supporting portion intersect and are connected to at least one inner wall of the heat exchange cavity (11) at an acute angle. The thermal management component (400), the battery (100) and the electric device provided in the embodiments can effectively prevent a casing from cracking.

## Description

### CROSS-REFERENCE TO RELATED APPLICATIONS

The present application claims priority to Chinese Patent Application No. 2023231298346, filed on November 20, 2023, entitled "THERMAL MANAGEMENT COMPONENT, BATTERY AND ELECTRICAL APPARATUS", the entire content of which is incorporated herein by reference.

### TECHNICAL FIELD

The present application relates to the technical field of batteries, and in particular to a thermal management component, a battery cell, and an electrical apparatus.

### BACKGROUND

Currently, on the market a cooling plate with a built-in cavity is typically used on the large surface of a battery cell to dissipate heat from the battery cell. The battery cell undergoes volume expansion during cycling, requiring the cooling plate to provide corresponding space to meet its surface pressure uniformity requirement.

However, current cooling plates often lack differentiated design, leading to excessive or insufficient local pressure on the battery cell. This can result in lithium plating or, due to insufficient local strength, excessive or insufficient expansion gap for the battery cell, thereby causing undesirable conditions of cracking on the surface of the case of the battery cell.

### SUMMARY OF THE INVENTION

Based on the above, there is a necessity to address the problem of cracking on the surface of the case of a battery cell, and to provide a thermal management component, a battery, and an electrical apparatus.

A first aspect of the present application provides a thermal management component, including: a plate body, the plate body enclosing a heat exchange cavity configured for a heat exchange medium to flow through, where along a length direction of the plate body, a plurality of support portions are arranged at intervals within the heat exchange cavity, and the heat exchange cavity includes a pair of inner walls arranged oppositely along a thickness direction, an end portion of each of the support portions intersecting and being connected to at least one of the inner walls of the heat exchange cavity at an acute angle.

In an embodiment, the plate body includes a first section and a second section sequentially connected along the length direction of the plate body, the first section being closer to an end portion of the plate body that is located along the length direction compared to the second section; and under application of an equal force on the first section and the second section, a deformation amount of the second section being greater than a deformation amount of the first section.

In an embodiment, the plate body includes a first section and a second section sequentially connected along the length direction of the plate body, the first section being closer to an end portion of the plate body that is located along the length direction compared to the second section; and the support portions include a plurality of first support portions and a plurality of second support portions, the first support portions being supported between the inner walls on two sides within the heat exchange cavity that correspond to the first section, and the second support portions being supported between the inner walls on two sides within the heat exchange cavity that correspond to the second section.

In an embodiment, the first support portions each has an included angle A with respect to an inner wall of the first section, and the second support portions each has an included angle B with respect to an inner wall of the second section, where B < A is satisfied.

In an embodiment, 25° ≤ B < A ≤ 90°.

In an embodiment, the plurality of first support portions are supported at intervals between inner walls on two sides of the first section along the length direction of the plate body, two adjacent first support portions having a spacing distance C therebetween; and the plurality of second support portions are supported at intervals between inner walls on two sides of the second section along the length direction of the plate body, two adjacent second support portions having a spacing distance D therebetween, where C < D is satisfied.

In an embodiment, 3 mm ≤ C < D ≤ 25 mm.

In an embodiment, the first support portions and the second support portions are all support ribs, the first support portions having a minimum rib thickness of E, and the second support portions having a minimum rib thickness of F, where F < E is satisfied.

In an embodiment, a fillet R1 is formed for transition between each of the first support portions and the inner walls on two sides of the first section; and a fillet R2 is formed for transition between each of the second support portions and the inner walls on two sides of the second section, where R1 ≥ R2 is satisfied.

In an embodiment, an inner wall stiffness of the first section is greater than an inner wall stiffness of the second section.

In an embodiment, a minimum wall thickness of the inner walls of the first section is G; and a minimum wall thickness of the inner walls of the second section is H, where H < G is satisfied.

A second aspect of the present application provides a battery, including a battery cell and the aforementioned thermal management component, where the second section is configured to be connected in a thermally conductive manner to a central portion of a large surface of the battery cell, and the first section is configured to be connected in a thermally conductive manner to a region of the large surface of the battery cell proximate to an edge.

A third aspect of the present application provides an electrical apparatus, including the aforementioned battery, the battery being configured to provide electrical energy.

### Beneficial effects:

In the thermal management component, the battery, and the electrical apparatus according to the present application, a plate body is provided, the plate body enclosing a heat exchange cavity configured for a heat exchange medium to flow through, where along a length direction of the plate body, a plurality of support portions are arranged at intervals within the heat exchange cavity, and the heat exchange cavity includes a pair of inner walls arranged oppositely along a thickness direction, an end portion of each of the support portions intersecting and being connected to at least one of the inner walls of the heat exchange cavity at an acute angle. In this way, on one hand, the support portions can provide support on the inner walls of the heat exchange cavity, enabling the thermal management component to have a certain stiffness, allowing the thermal management component to be closely attached to the battery cell during volume expansion of the electrode assembly in charging and discharging cycles, thereby providing uniform support and cooling; on the other hand, since the end portion of each of the support portions intersects and is connected to the inner wall of the heat exchange cavity at an acute angle, when the battery deforms and expands, the inclined support portions can deform slightly to adapt to the expansion requirements at different positions of the battery cell, thereby ultimately effectively preventing the case of the battery cell from cracking.

### BRIEF DESCRIPTION OF THE DRAWINGS

In order to more clearly illustrate the technical solutions of the embodiments of the present application, the drawings required in the embodiments of the present application will be described briefly below. Apparently, the drawings described below depict merely some embodiments of the present application. For those of ordinary skill in the art, other drawings can also be obtained based on these drawings without any creative effort. In the accompanying drawings:
FIG. 1 is a schematic structural diagram of a vehicle according to some embodiments of the present application.
FIG. 2 is an exploded schematic structural diagram of a battery according to some embodiments of the present application.
FIG. 3 is a schematic structural diagram of a battery module according to some embodiments of the present application.
FIG. 4 is an assembly schematic diagram of a battery cell and a thermal management component according to some embodiments of the present application.
FIG. 5 is a schematic structural diagram of a thermal management component according to some embodiments of the present application, where the dashed line represents the boundary between a first section and a second section.
FIG. 6 is a cross-sectional view taken along line J-J of the structure shown in FIG. 5, where the dashed line represents the boundary between the first section and the second section.

### Reference signs:

thermal management component - 400; plate body - 10; heat exchange cavity - 11; first section - 12; second section - 13; first support portion - 20; second support portion - 30.

### DETAILED DESCRIPTION

The technical solutions in the embodiments of the present application will be clearly and completely described below in conjunction with the drawings in the embodiments of the present application, and it is apparent that the described embodiments are only a part of the embodiments of the present application rather than all the embodiments. All the other embodiments obtained by a person of ordinary skill in the art based on the embodiments of the present application without any creative effort shall fall within the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, if technical terms such as "first" and "second" appear, these terms are used for descriptive purposes only, to distinguish between different objects, and should not be construed as indicating or implying relative importance or implicitly specifying the quantity, specific order, or primary-secondary relationship of the indicated technical features.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association that describes the associated object, indicating that there can be three kinds of relationships, such as A and/or B, which can be denoted as: the existence of A alone, the existence of A and B at the same time, and the existence of B alone. In addition, the character "/" herein generally means that there is an "or" relationship between associated objects therebefore and thereafter.

In the description of the embodiments of the present application, if the term "a plurality of" appears, the meaning of "a plurality of" is at least two (including two), such as two, three, etc., unless expressly and specifically defined otherwise. Similarly, if the term "a plurality of groups" appears, "a plurality of groups" refers to more than two groups (including two groups); if the term "a plurality of pieces" appears, "a plurality of pieces" refers to more than two pieces (including two pieces).

In the description of the embodiments of the present application, if terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., appear, the orientations or positional relationships indicated by these terms are based on the orientations or positional relationships shown in the accompanying drawings. They are used only for facilitating the description of the embodiments of the present application and simplifying the description, rather than indicating or implying that the referred apparatus or element must have a specific orientation or be constructed and operated in a specific orientation. Therefore, they should not be construed as limitations on the embodiments of the present application.

In the description of the embodiments of the present application, unless expressly specified and limited otherwise, if technical terms such as "mount", "connected", "connection", "fix", etc., appear, these terms should be interpreted broadly. For example, it may be a fixed connection, a detachable connection, or an integral connection; it may be a mechanical connection, or an electrical connection; it may be a direct connection, an indirect connection through an intermediary medium, a communication within two elements, or an interaction relationship between two elements. For those of ordinary skill in the art, the specific meanings of the aforementioned terms in the embodiments of the present application can be understood according to specific situations.

In the present application, unless otherwise explicitly defined or limited, if a description such as "a first feature being on or under a second feature" appears, it may mean that the first and second features are in direct contact, or that the first and second features are in indirect contact through an intermediate medium. Furthermore, the expression the first feature being "over", "above" and "on top of" the second feature may be a case that the first feature is directly above or obliquely above the second feature, or only means that the level of the first feature is higher than that of the second feature. The expression the first feature being "below," "underneath" or "under" the second feature may be a case that the first feature is directly underneath or obliquely underneath the second feature, or only means that the level of the first feature is lower than that of the second feature.

It should be noted that if an element is referred to as "fixed to" or "arranged to" another element, it may be directly on the other element or there may be an intermediate element. If one element is considered to be "connected" to another element, it may be directly connected to another element or there may also be an intermediate element. Where applicable, terms used in the present application such as "vertical", "horizontal", "upper", "lower", "left", "right", and similar expressions are for illustrative purposes only and do not represent the sole implementation.

At present, from the perspective of the development of the market situation, power batteries are increasingly more widely used. Power batteries are not only used in energy storage power systems such as hydropower, thermal power, wind power and solar power stations, but also widely used in electric vehicles such as electric bicycles, electric motorcycles, and electric vehicles, as well as aerospace and other fields. With the continuous expansion of the application field of power batteries, their market demand is also constantly increasing.

In related technologies, during the charging and discharging cycles of a battery cell, volume expansion occurs in the battery cell. Since the case of the battery cell and the end cover at the top end are typically connected by welding, the initial opening of the case is at the top. Therefore, the constraining force exerted by the top of the case on the electrode assembly (hereinafter referred to as the JR) is less than the constraining force exerted on the JR by the bottom in its closed state. This imbalance in constraining forces may lead to a risk of case cracking in the battery cell at the end of its cycle life.

To alleviate the problem of cracking on the surface of the case of the battery cell, corresponding differentiated designs can be applied to the thermal management component. By having the top of the case engage with one end of the thermal management component, it is ensured that the end portion of the thermal management component that engages with the top of the case has greater pressure-bearing capacity. In this way, the end portion of the thermal management component and the case together constrain the JR and the top end of the case, thereby preventing situations of excessive or insufficient local pressure on the battery cell and effectively alleviating case cracking.

Some embodiments of the present application provide a thermal management component, a battery, and an electrical apparatus. The electrical apparatus may be, but is not limited to, a mobile phone, a tablet, a laptop, an electric toy, an electric tool, a battery vehicle, an electric vehicle, a ship, a spacecraft, and so on. Among them, the electric toy may include a stationary or mobile electric toy, such as a game machine, an electric car toy, an electric ship toy, or an electric airplane toy, and the spacecraft may include an airplane, a rocket, an aerospace plane, a spaceship, and the like.

It should be understood that the technical solutions described in the various embodiments of the present application are not only applicable to the batteries and electrical apparatuses described above, but can also be applied to all batteries including box and electrical apparatuses using batteries. However, for conciseness of description, an example where an electrical apparatus according to an embodiment of the present application is a vehicle 1000 is taken for explanation.

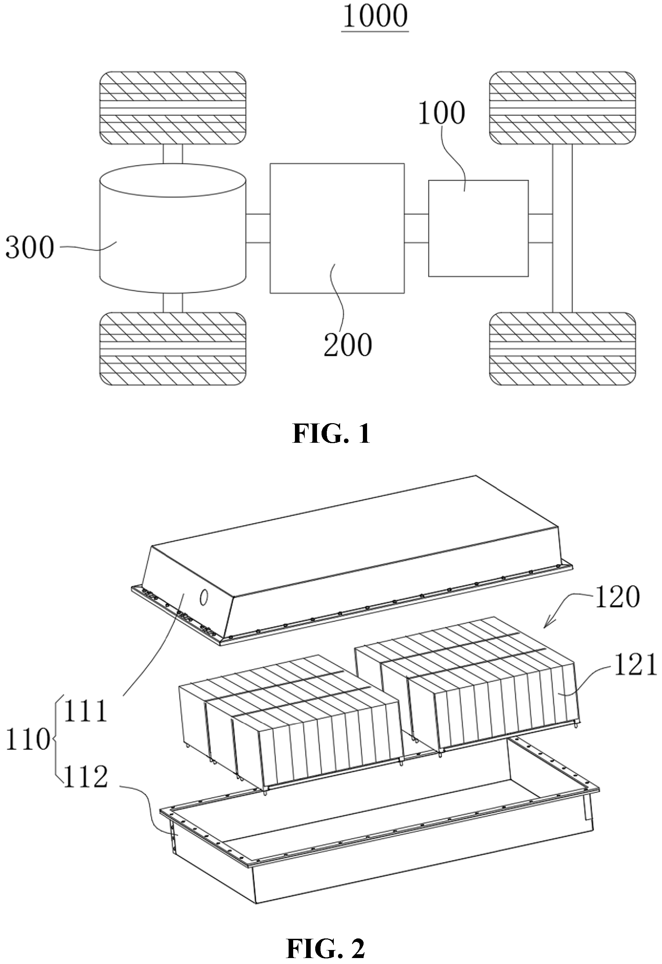

Referring to FIG. 1. FIG. 1 is a schematic structural diagram of a vehicle 1000 according to some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. A battery 100 is provided inside the vehicle 1000, and the battery 100 may be disposed at a bottom, or head, or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is used to control the battery 100 to supply power to the motor 300, for example, to supply power for starting, navigation and driving of the vehicle 1000.

In some embodiments of the present application, the battery 100 not only can serve as an operating power source of the vehicle 1000, but also can serve as a driving power source of the vehicle 1000, to provide driving power for the vehicle 1000 in place of or partially in place of fuel or natural gas.

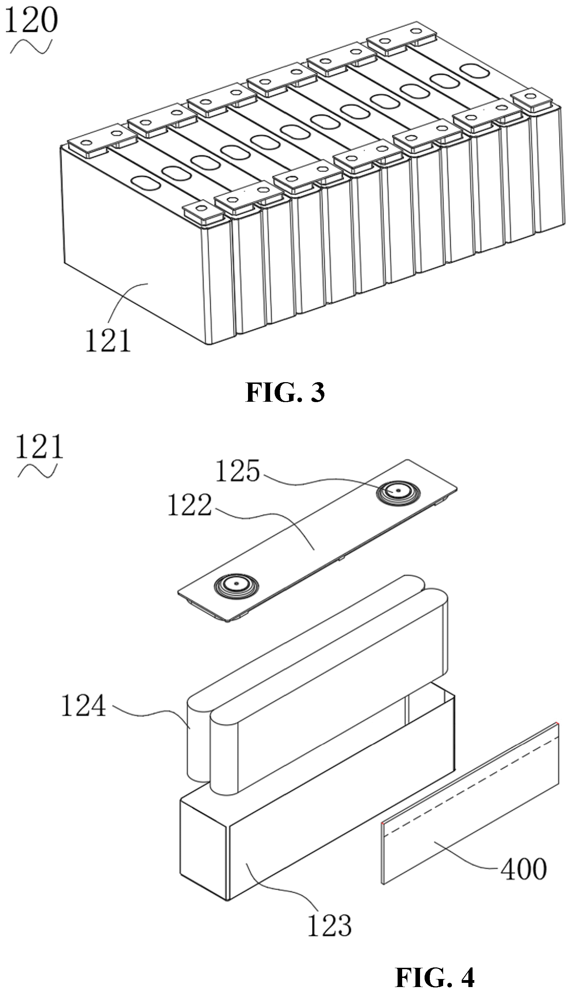

FIG. 2 is an exploded view of a battery 100 according to some embodiments of the present application; and FIG. 3 is a schematic structural diagram of a battery module according to some embodiments of the present application. Referring to FIG. 2 and FIG. 3, to meet different power usage requirements, the battery 100 may include a plurality of battery cells 121 and a box 110. A battery cell 121 refers to the smallest unit constituting a battery module 120 or a battery pack. The plurality of battery cells 121 may be connected in series and/or in parallel via electrode terminals to be used in various applications. The battery 100 mentioned in the present application is a battery pack.

The box 110 is configured to accommodate the battery cells 121 or the battery module 120, preventing liquids or other foreign objects from affecting the charging or discharging of the battery cells 121.

The box 110 may adopt various structures. In some embodiments, the box 110 may include a first portion 111 and a second portion 112, the first portion 111 and the second portion 112 covering each other, and the first portion 111 and the second portion 112 together defining the accommodating space for accommodating the battery cell 121. The second portion 112 may be of a hollow structure with one end open, the first portion 111 may be of a plate-like structure, and the first portion 111 covers the opening side of the second portion 112, such that the first portion 111 and the second portion 112 jointly define the accommodating space; or the first portion 111 and the second portion 112 may each be of a hollow structure with one side open, and the opening side of the first portion 111 covers the opening side of the second portion 112. Certainly, the box 110 formed by the first portion 111 and the second portion 112 may be of various shapes. For example, it may be a simple three-dimensional structure such as a rectangular prism, cylinder, or sphere alone, or a complex three-dimensional structure composed of combinations of simple three-dimensional structures such as rectangular prisms, cylinders, or spheres, which is not limited in the implementations of the present application. The material of the box 110 may be alloy materials such as aluminum alloy, iron alloy, etc., or polymer materials such as polycarbonate and polyisocyanurate foam, or composite materials such as glass fiber and epoxy resin, which will not be limited in the embodiments of the present application.

In the embodiments of the present application, the plurality of battery cells 121 may directly constitute a battery pack, or may first constitute a battery module 120, and then the battery module 120 constitutes the battery pack. Specifically, the plurality of battery cells 121 may be directly connected in series, parallel, or parallel-series connection to form an integral unit, and then the integral unit composed of the plurality of battery cells 121 is accommodated within the box 110. Alternatively, the plurality of battery cells 121 may first be connected in series, parallel, or parallel-series connection to form a battery module 120, and then a plurality of battery modules 120 are connected in series, parallel, or parallel-series connection to form an integral unit, which is accommodated within the box 110.

The battery 100 may further include other structures. For example, the battery 100 may further include a busbar component configured to achieve electrical connections between the plurality of battery cells 121.

Each battery cell 121 may be a secondary battery or a primary battery, and may also be a lithium-sulfur battery, a sodium-ion battery, or a magnesium-ion battery, but is not limited thereto. The battery cells 121 may be cylindrical, flat, rectangular, or in other shapes. Battery cells 121 are generally classified into three types according to encapsulating manners: cylindrical battery cells, square battery cells, and pouch cells, which is also not limited in the implementations of the present application. However, for conciseness of description, the following embodiments will be described using a prismatic lithium-ion battery cell 121 as an example.

Referring to FIG. 4, and FIG. 4 is a schematic exploded structural diagram of a battery cell 121 provided in some embodiments of the present application. The battery cell 121 includes an end cover 122, a case 123, an electrode assembly 124, and other functional components.

The end cover 122 is a component that covers an opening of the case 123 to isolate an internal environment of the electrode assembly 124 from an external environment. Without limitation, the shape of the end cover 122 may be adapted to the shape of the case 123 to engage with the case 123. In some embodiments, the end cover 122 may be made of a material (such as an aluminum alloy) with a certain hardness and strength, such that the end cover 122 is less likely to deform when being pressed and collided, enabling the battery cell 121 to have a higher structural strength, and also the safety performance to be improved. The end cover 122 may be provided with functional components such as electrode terminals 125. The electrode terminals 125 can be used for electrical connections with the electrode assembly 124 for use in outputting or inputting electrical energy from or to the battery cell 121. In some embodiments, the end cover 122 may be further provided with a pressure relief mechanism for relieving internal pressure when the internal pressure or temperature of the battery cell 121 reaches a threshold. The end cover 122 may also be made of a variety of materials, such as copper, iron, aluminum, stainless steel, aluminum alloy, plastic, etc., and the embodiments of the present application are not particularly limited in this regard. In some embodiments, an insulating member may be further provided on an inner side of the end cover 122 and may be used for isolating an electrical connecting component in the case 123 from the end cover 122, thereby reducing the risk of short circuit. As an example, the insulating member may be made of plastic, rubber, and the like.

The case 123 is an assembly for engaging with the end cover 122 to form the internal environment of the battery cell 121, wherein the formed internal environment can be configured to accommodate the electrode assembly 124, electrolyte solution, and other components. The case 123 and the end cover 122 may be separate components, and an opening may be provided in the case 123, and the internal environment of the battery cell 121 may be formed by making the end cover 122 cover the opening at the opening. The case 123 may be of various shapes and dimensions, such as a rectangular solid, a cylinder, and a hexagonal prism. Specifically, the shape of the case 123 may be determined based on the specific shape and dimension of the electrode assembly 124. The case 123 may be made of various materials, such as copper, iron, aluminum, stainless steel, aluminum alloy, and plastic, which is not particularly limited in the embodiments of the present application.

The electrode assembly 124 is the component within the battery cell 121 where electrochemical reactions occur, commonly referred to as the JR assembly. The case 123 may contain one or more electrode assemblies 124 inside. The electrode assembly 124 is formed primarily by the winding or laminated placement of a positive electrode plate and a negative electrode plate, and is usually provided with a separator between the positive electrode plate and the negative electrode plate. The portions of the positive electrode plate and the negative electrode plate having active materials constitute a main body part of the electrode assembly 124, and the portions of the positive electrode plate and the negative electrode plate having no active materials each constitute a tab (not shown). The positive tab and the negative tab may be located at one end of the main body part together or located at two ends of the main body part respectively. During charging and discharging of the battery, the positive electrode active material and the negative electrode active material react with the electrolyte solution, and the tabs are connected to the electrode terminal 125 to form a current loop.

A thermal management component 400 is provided between two oppositely arranged surfaces of two battery cells 121 along a vertical direction. Specifically, the thermal management component 400 may be provided between two large surfaces or between two side surfaces of the two battery cells, thereby cooling the battery cells 121.

The first aspect of the present application provides a thermal management component 400. The thermal management component 400 may have a flat-plate structure, with a medium flowing internally, configured for thermal management of the battery cell to prevent it from overheating or overcooling.

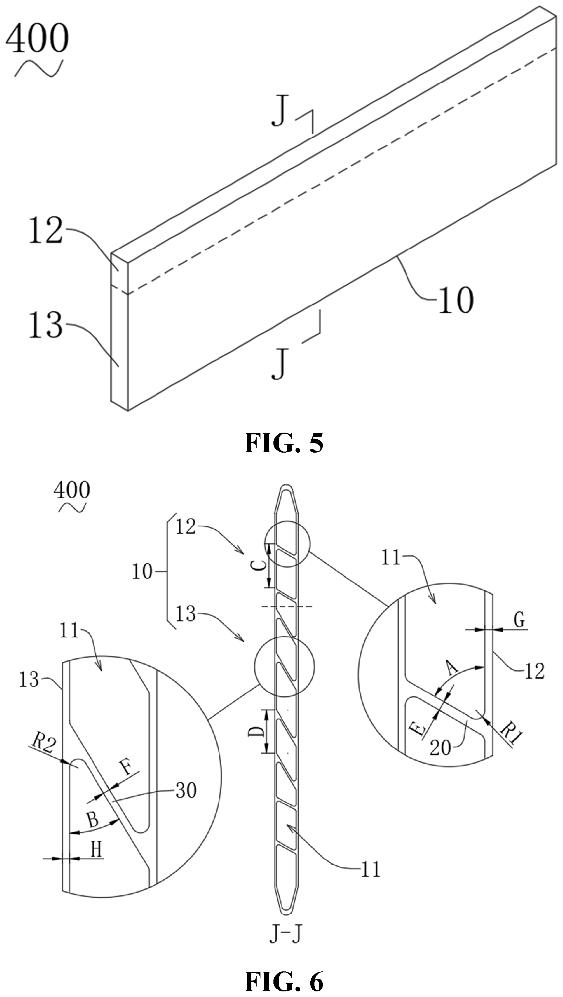

Referring to FIG. 5 and FIG. 6. FIG. 5 is a schematic structural diagram of a thermal management component according to some embodiments of the present application; and FIG. 6 is a cross-sectional view taken along line J-J of the structure shown in FIG. 5. The thermal management component 400 includes: a plate body 10, a plurality of first support portions 20, and a plurality of second support portions 30.

The plate body 10 encloses a heat exchange cavity 11 configured for a cooling medium to flow through. The plate body 10 may be made of a highly thermally conductive aluminum alloy, such as AA6061 or AA7075, to ensure the cooling effect on the battery cell 121. The heat exchange cavity 11 may be formed by welding connection, such as tungsten inert gas (TIG) welding or metal inert gas (MIG) welding, to ensure the reliability of flow of the cooling medium.

Along a length direction of the plate body 10, a plurality of support portions are arranged at intervals within the heat exchange cavity 11, and the heat exchange cavity 11 includes a pair of inner walls arranged oppositely along a thickness direction, an end portion of each of the support portions intersecting and being connected to at least one of the inner walls of the heat exchange cavity 11 at an acute angle. In this way, on one hand, the support portions can provide support on the inner walls of the heat exchange cavity 11, enabling the thermal management component 400 to have a certain stiffness, allowing the thermal management component 400 to be closely attached to the battery cell 121 during volume expansion of the electrode assembly 124 in charging and discharging cycles, thereby providing uniform support and cooling; on the other hand, since the end portion of each of the support portions intersects and is connected to the inner wall of the heat exchange cavity 11 at an acute angle, when the battery 100 deforms and expands, the inclined support portions can deform slightly to adapt to the expansion requirements at different positions of the battery cell 121, thereby ultimately effectively preventing the case 123 of the battery cell 121 from cracking.

In some possible embodiments, referring to FIG. 1 to FIG. 5, the plate body 10 includes a first section 12 and a second section 13 sequentially connected along a length direction of the plate body. The second section 13 can be configured to be attached to a side large surface of the battery cell, and the first section 12 can be configured to be attached to a region of the side large surface of the battery cell proximate to an end portion. The first section 12 is closer to an end portion of the plate body 10 that is located along the length direction compared to the second section 13.

Under application of an equal force on the first section 12 and the second section 13, a deformation amount of the second section 13 is greater than a deformation amount of the first section 12. In other words, an inner wall stiffness of the first section 12 is greater than an inner wall stiffness of the second section 13; and the second section 13 is relatively more prone to deformation than the first section 12. This enables the thermal management component 400 to adapt to the expansion requirements at different positions of the battery cell 121. Specifically, the first section 12 can be attached to regions of the battery cell 121 prone to expansion and deformation, for example, the connection area between the opening at the top of the case 123 and the end cover 122. Relying on the greater pressure-bearing capacity of the first section 12, further deformation and expansion of the battery cell 121 can be effectively prevented. The second section 13 can be attached to regions of the battery cell 121 less prone to expansion and deformation, for example, the central and bottom areas of the case 123. By attaching the second section 13 to the surface of the battery cell 121, uniform support and cooling effects are provided, thereby ultimately effectively preventing the case 123 of the battery cell 121 from cracking.

In some possible embodiments, referring to FIG. 1 to FIG. 5, the plate body 10 includes a first section 12 and a second section 13 sequentially connected along a length direction of the plate body, the first section 12 being closer to an end portion of the plate body 10 that is located along the length direction compared to the second section 13.

The support portions include a plurality of first support portions 20 and a plurality of second support portions 30. All the first support portions 20 are supported between the inner walls on two sides of the heat exchange cavity 11 that correspond to the first section 12; and all the second support portions 30 are supported between the inner walls on two sides of the heat exchange cavity 11 that correspond to the second section 13. A pressure-bearing capacity of the first section 12 is greater than a pressure-bearing capacity of the second section 13.

By designing different sections of the plate body 10 and making the pressure-bearing capacity of the first section 12 greater than that of the second section 13, the thermal management component 400 can adapt to the expansion requirements at different positions of the battery cell 121. The first section 12 is configured to be attached to a region of a side large surface of the battery cell proximate to an end portion. The connection area between the opening at the top of the case 123 and the end cover 122 expands due to the increased volume of the electrode assembly 124 and abuts against the first section 12. The greater pressure-bearing capacity of the first section 12 can effectively constrain the opening at the top of the case 123 and the end cover 122, preventing their further deformation and expansion. Since the central and bottom areas of the case 123 are closed, the volume expansion of the electrode assembly 124 during charging and discharging cycles has less impact on the central and bottom areas of the case 123. The second section 13 can be attached to the side large surface of the battery cell, providing uniform support and cooling effects, thereby ultimately effectively preventing the case 123 of the battery cell 121 from cracking.

In some embodiments, the first support portions 20 and the second support portions 30 may be made of a highly thermally conductive aluminum alloy, such as AA6061 or AA7075, to ensure that the first support portions 20 can transfer heat promptly, thereby ensuring good cooling effects of the thermal management component 400. The first support portions 20 and the second support portions 30 may also be made of other alloy materials, for example, copper alloy, stainless steel alloy, etc., which is not limited in the present application.

In some embodiments, edge regions of the thermal management component 400 may be made of a material with relatively high stiffness, for example, stainless steel alloy, to meet the expansion requirements at different positions of the battery cell 121.

In some embodiments, the thermal management component 400 may undergo co-extrusion of plastic and metal in cavities at positions contacting the case 123 of the battery cell 121, and can engage with a current collector to adjust flow and pressure drop at different positions, thereby meeting the expansion requirements of the battery cell.

In some embodiments, a maximum value of the pressure-bearing capacity of the first section 12 may be designed to be 10-15 Newtons per square centimeter (N/cm2); and a maximum value of the pressure-bearing capacity of the first section 12 may be 6-10 N/cm2.

It is emphasized that the pressure-bearing capacity of the thermal management component 400 in the present application refers to the following: if the force born per unit area is lower than the maximum value of the pressure-bearing capacity, the thermal management component 400 will not exhibit noticeable deformation. In this way, it can consistently fit against the surface of the battery cell to provide uniform cooling.

In some possible embodiments, referring to FIG. 4 and FIG. 5, the first support portions 20 each has an included angle A with respect to an inner wall of the first section 12, and the second support portions 30 each has an included angle B with respect to an inner wall of the second section 13, where B < A is satisfied.

Specifically, the included angle A between each of the first support portions 20 and an inner wall of the first section 12, and the included angle B between each of the second support portions 30 and an inner wall of the second section 13 satisfy the following numerical relationship: 25 degrees (°) ≤ B < A ≤ 90 degrees (°).

By utilizing the difference in angles, the larger angle allows the first support portions 20 to bear force more effectively, thereby making the pressure-bearing capacity of the first section 12 greater than that of the second section 13. This enables the thermal management component 400 to provide uniform support and cooling effects for the battery cell 121, thereby preventing the case 123 of the battery cell 121 from cracking.

In some possible embodiments, referring to FIG. 4 and FIG. 5, the plurality of first support portions 20 are supported at intervals between inner walls on two sides of the first section 12 along the length direction of the plate body 10, two adjacent first support portions 20 having a spacing distance C therebetween, where 3 millimeters (mm) ≤ C ≤ 25 millimeters (mm); and preferably, the spacing distance C between two adjacent first support portions 20 may be 4 mm-20 mm. The plurality of second support portions 30 are supported at intervals between inner walls on two sides of the second section 13 along the length direction of the plate body 10, two adjacent second support portions 30 having a spacing distance D therebetween, where 3 mm ≤ C < D ≤ 25 mm is satisfied; and preferably, the spacing distance D between two adjacent second support portions 30 may be 20 mm-25 mm. By utilizing the difference in spacing distances, the smaller spacing distance makes the first support portions 20 denser, allowing them to bear force more effectively, thereby making the pressure-bearing capacity of the first section 12 greater than that of the second section 13. This enables the thermal management component 400 to provide uniform support and cooling effects for the battery cell 121, thereby preventing the case 123 of the battery cell 121 from cracking.

In some possible embodiments, referring to FIG. 4 and FIG. 5, the first support portions 20 and the second support portions 30 are all support ribs, the first support portions 20 having a minimum rib thickness of E, where 0.1 mm ≤ E ≤ 3 mm; and preferably, the thickness E of the first support portion 20 may be 0.1 mm-2 mm; and the second support portions 30 having a minimum rib thickness of F, where F < E is satisfied; and preferably, the thickness F of the second support portion 30 may generally be 0.08 mm-1 mm. By utilizing the difference in hardness of the support ribs themselves, the thicker first support portions 20 are enabled to bear force more effectively, thereby making the pressure-bearing capacity of the first section 12 greater than that of the second section 13. This enables the thermal management component 400 to provide uniform support and cooling effects for the battery cell 121, thereby preventing the case 123 of the battery cell 121 from cracking.

In some possible embodiments, referring to FIG. 4 and FIG. 5, a fillet R1 is formed for transition between each of the first support portions 20 and the inner walls on two sides of the first section 12, where 0.2 mm ≤ R1 ≤ 2 mm; and preferably, the fillet R1 between the first support portion 20 and the inner walls of the first section 12 may be 0.3 mm-1.5 mm. A fillet R2 is formed for transition between each of the second support portions 30 and the inner walls on two sides of the second section 13, where R1 ≥ R2 is satisfied; and preferably, the fillet R2 between the second support portion 30 and the inner walls of the second section 13 may be 0.1-0.3 mm. A larger fillet means more material at the connection area between the support rib and the inner walls, resulting in smaller stress and higher connection strength. By using a larger fillet, the first support portion 20 is enabled to bear force more effectively, thereby making the pressure-bearing capacity of the first section 12 greater than that of the second section 13. This enables the thermal management component 400 to provide uniform support and cooling effects for the battery cell 121, thereby preventing the case 123 of the battery cell 121 from cracking.

In some possible embodiments, referring to FIG. 4 and FIG. 5, a minimum wall thickness of the inner walls of the first section 12 is G, where 0.1 mm ≤ G ≤ 3 mm; and preferably, the wall thickness G of the side walls of the first section 12 is 0.1 mm-2 mm; and a minimum wall thickness of the inner walls of the second section 13 is H, where H < G is satisfied; and the wall thickness H of the side walls of the first section 12 may be 0.08-1.5 mm. By using thicker materials, the pressure-bearing capacity of the side walls of the thermal management component 400 is improved, thereby making the pressure-bearing capacity of the first section 12 greater than that of the second section 13. This enables the thermal management component 400 to provide uniform support and cooling effects for the battery cell 121, thereby preventing the case 123 of the battery cell 121 from cracking.

Edge regions of the thermal management component 400 may be made of a material with relatively high stiffness, for example, aluminum alloy, to meet the expansion requirements at different positions of the battery cell 121.

The second aspect of the present application provides a battery 100. Referring to FIG. 1 to FIG. 5, the battery 100 includes a battery cell 121 and a thermal management component 400, where the second section 13 is configured to be connected in a thermally conductive manner to a central portion of a large surface of the battery cell 121, and the first section 12 is configured to be connected in a thermally conductive manner to a region of the large surface of the battery cell 121 proximate to an edge.

The third aspect of the present application provides an electrical apparatus, including the aforementioned battery 100, the battery 100 being configured to supply electrical energy to the electrical apparatus. By using the battery 100 containing the thermal management component 400, design requirements of the electrical apparatus can be effectively met, and the stability and consistency during expansion of the battery cell 121 can be ensured, thereby enhancing the service life and performance of the electrical apparatus.

The technical features of the embodiments described above can be combined arbitrarily. In order to make the description concise, not all possible combinations of the technical features in the aforementioned embodiments are described. However, all the combinations of the technical features should be considered as falling within the scope described in this specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. A thermal management component, comprising:
a plate body (10), the plate body (10) enclosing a heat exchange cavity (11) configured for a heat exchange medium to flow through, wherein along a length direction of the plate body (10), a plurality of support portions are arranged at intervals within the heat exchange cavity (11), and the heat exchange cavity (11) comprises a pair of inner walls arranged oppositely along a thickness direction, an end portion of each of the support portions intersecting and being connected to at least one of the inner walls of the heat exchange cavity (11) at an acute angle.

2. The thermal management component according to claim 1, wherein the plate body (10) comprises a first section (12) and a second section (13) sequentially connected along the length direction of the plate body, the first section (12) being closer to an end portion of the plate body (10) that is located along the length direction compared to the second section (13); and
under application of an equal force on the first section (12) and the second section (13), a deformation amount of the second section (13) being greater than a deformation amount of the first section (12).

3. The thermal management component according to claim 1 or 2, wherein the plate body (10) comprises a first section (12) and a second section (13) sequentially connected along the length direction of the plate body, the first section (12) being closer to an end portion of the plate body (10) that is located along the length direction compared to the second section (13); and
the support portions comprise a plurality of first support portions (20) and a plurality of second support portions (30), the first support portions (20) being supported between the inner walls on two sides within the heat exchange cavity (11) that correspond to the first section (12), and the second support portions (30) being supported between the inner walls on two sides within the heat exchange cavity (11) that correspond to the second section (13).

4. The thermal management component according to claim 3, wherein the first support portions (20) each has an included angle A with respect to an inner wall of the first section (12), and the second support portions (30) each has an included angle B with respect to an inner wall of the second section (13), wherein B < A is satisfied.

5. The thermal management component according to claim 4, wherein 25° ≤ B < A ≤ 90°.

6. The thermal management component according to any one of claims 3 to 5, wherein the plurality of first support portions (20) are supported at intervals between inner walls on two sides of the first section (12) along the length direction of the plate body (10), two adjacent first support portions (20) having a spacing distance C therebetween; and the plurality of second support portions (30) are supported at intervals between inner walls on two sides of the second section (13) along the length direction of the plate body (10), two adjacent second support portions (30) having a spacing distance D therebetween, wherein C < D is satisfied.

7. The thermal management component according to claim 6, wherein 3 mm ≤ C < D ≤ 25 mm.

8. The thermal management component according to any one of claims 3 to 6, wherein the first support portions (20) and the second support portions (30) are all support ribs, the first support portions (20) having a minimum rib thickness of E, and the second support portions (30) having a minimum rib thickness of F, wherein F < E is satisfied.

9. The thermal management component according to any one of claims 3 to 6, wherein a fillet R1 is formed for transition between each of the first support portions (20) and the inner walls on two sides of the first section (12); and
a fillet R2 is formed for transition between each of the second support portions (30) and the inner walls on two sides of the second section (13), wherein R1 ≥ R2 is satisfied.

10. The thermal management component according to any one of claims 2 to 6, wherein an inner wall stiffness of the first section (12) is greater than an inner wall stiffness of the second section (13).

11. The thermal management component according to claim 10, wherein a minimum wall thickness of the inner walls of the first section (12) is G; and a minimum wall thickness of the inner walls of the second section (13) is H, wherein H < G is satisfied.

12. A battery, comprising a battery cell and the thermal management component of any one of claims 2 to 11,
wherein the second section (13) is configured to be connected in a thermally conductive manner to a central portion of a large surface of the battery cell, and the first section (12) is configured to be connected in a thermally conductive manner to a region of the large surface of the battery cell proximate to an edge.

13. An electrical apparatus, comprising the battery of claim 12, the battery being configured to provide electrical energy.
